# EUROPÄISCHE PATENTSCHRIFT

(11) **EP 3 596 350 B1**
(45) Veröffentlichungstag und Bekanntmachung des Hinweises auf die Patenterteilung: **11.11.2020**
(21) Anmeldenummer: 18713151.1
(22) Anmeldetag: 14.03.2018
(51) Int. Cl.: F16C 19/38, F16C 19/50, F16C 21/00, F16C 32/06

(54) **HYDROSTATISCHE LAGERANORDNUNG UND WINDENERGIEANLAGE**
HYDROSTATIC BEARING ASSEMBLY AND WIND TURBINE
ENSEMBLE PALIER HYDROSTATIQUE ET ÉOLIENNE

(30) Priorität: 15.03.2017 DE 102017105577
(43) Veröffentlichungstag der Anmeldung: 22.01.2020
(73) Patentinhaber: thyssenkrupp rothe erde Germany GmbH, 44137 Dortmund (DE); thyssenkrupp AG, 45143 Essen (DE)
(72) Erfinder: LÜNEBURG, Bernd, 45481 Mülheim (DE); ROLLMANN, Jörg, 59558 Lippstadt (DE); ELFERT, Gunther, 59597 Erwitte (DE)
(74) Vertreter: thyssenkrupp Intellectual Property GmbH
(86) Internationale Anmeldenummer: PCT/EP2018/056343
(87) Internationale Veröffentlichungsnummer: WO 2018/167125

(56) Entgegenhaltungen:
- EP-A1- 1 406 012
- EP-A1- 2 921 728
- EP-A2- 1 209 287
- EP-A2- 2 829 752
- CH-A5- 606 793
- DE-A1- 2 557 875
- DE-A1-102011 008 267
- GB-A- 2 070 156
- US-A- 3 708 215
- US-A- 3 782 793
- US-A- 3 827 767

## Beschreibung

### Stand der Technik

Die vorliegende Erfindung betrifft eine Windenergieanlage mit einer Rotorwelle, wobei die Rotorwelle über eine Lageranordnung mit einem ersten Lagerring und einem drehbar gegenüber dem ersten Lagerring gelagerten zweiten Lagerung gelagert ist, wobei an dem ersten Lagerring mindestens ein hydrostatisch abgestütztes erstes Gleitlagersegmente angeordnet ist, das mit einer an dem zweiten Lagerring angeordneten ersten Gleitfläche zusammenwirkt.

Aus der DE 10 2011 008 267 A1 ist eine Lageranordnung zur Lagerung einer solchen Rotorwelle einer Windenergieanlage gemäß dem Oberbegriff des Anspruchs 1 bekannt, welche mehrere hydrostatisch abgestützte Gleitlagersegmente aufweist. Die Gleitlagersegmente sind in einer sphärisch ausgebildeten Umfangsfläche des Außenrings dieser Lageranordnung elastisch gelagert. Hierzu sind die Gleitlagersegmente nicht fest montiert, sondern auf einer mechanischen oder hydraulischen Feder radial und rückstellbar verschiebbar zu einer Dichtfläche des Innenrings angeordnet. Diese mechanischen oder hydraulischen Federn zur Lagerung der einzelnen Gleitlagersegmente bringt jedoch bei solchen Lagern, die eine hohe Anzahl derartiger Gleitlagersegmente aufweisen einen erhöhten Montage- und Wartungsaufwand mit sich.

Aus DE 2 557 875 A1 ist eine Radiallagerung bekannt bei welcher der Rotor unter wechselnder Fliehkraft oder thermischer Beanspruchung im Durchmesser wachsen oder schrumpfen kann. Dies wird dadurch erreicht, dass der Rotor mindestens in Haupt-Stützrichtungen gegenüber dem Fundament radial abgestützt ist und dass höchstens die in zwei Hauptstützrichtungen wirkenden Lagerschuhe gegenüber dem Fundament formschlüssig gelagert sind, während die übrigen Lagerschuhe gegenüber dem Fundament radial verschieblich kraftschlüssig gelagert sind.

Aus GB 2 070 156 A ist ein hydrostatisches Lager mit einem drosselnden Eingangskanal für das Druckmedium bekannt, der in zufriedenstellender Weise mit dem erforderlichen Drosseleffekt mechanisch hergestellt werden kann und bei dem das Risiko eine Blockade verringert ist. Dies wird durch einen Eingangskanal für die Lagertaschen erreicht, der bis zu der Lagerfläche heranreicht, so dass dessen Endfläche mit der Lagerfläche einen ringförmigen Drosselspalt ausbildet.

Aus CH 606 793 A5 ist auch ein hydrostatisches Lager bekannt, das die Lagerung eines Schaufelrads einer Rohrturbine oder Rohrpumpe durch die Verwendung hydrostatischer zentrierender Stützkolben berührungslos gewährleistet.

### Offenbarung der Erfindung

Vor diesem Hintergrund ist es Aufgabe der vorliegenden Erfindung, eine Windenergieanlage mit einer Rotorwelle anzugeben, wobei die Rotorwelle gelagert ist über eine Lageranordnung, welche einen geringeren Montage- und Wartungsaufwand erfordert.

Zur Lösung der Aufgabe wird eine Lageranordnung mit einem ersten Lagerring und einem drehbar gegenüber dem ersten Lagerring gelagerten zweiten Lagerring vorgeschlagen, wobei an dem ersten Lagerring mindestens ein hydrostatisch abgestütztes erstes Gleitlagersegment angeordnet ist, das mit einer an dem zweiten Lagerring angeordneten ersten Gleitfläche zusammenwirkt, wobei das erste Gleitlagersegment, derart in einer Aufnahmetasche des ersten Lagerrings aufgenommen ist, dass zwischen dem ersten Lagerring und dem ersten Gleitlagersegment ein erster Druckraum gebildet ist und das erste Gleitlagersegment derart ausgebildet ist, dass zwischen dem ersten Gleitlagersegment und dem zweiten Lagerring mehrere zweite Druckräume gebildet sind, wobei der erste Druckraum und die zweiten Druckräume über mehrere durch das erste Gleitlagersegment verlaufende Kanäle verbunden sind.

Bei der erfindungsgemäßen Lageranordnung wird zwischen dem ersten Lagerring und dem ersten Gleitlagersegment ein erster Druckraum gebildet. Durch Einleiten eines Schmiermittels in den ersten Druckraum kann in dem ersten Druckraum ein Druck erzeugt, werden, der das erste Gleitlagersegment in Richtung der ersten Gleitfläche des zweiten Lagerrings drückt und als Feder-Dämpfer-System wirkt. Zwischen dem ersten Gleitlagersegment und dem zweiten Lagerring, insbesondere der Gleitfläche des zweiten Lagerrings, werden mehrere zweite Druckräume gebildet, in welchen sich ein Schmiermittelfilm mit einer Schmierspaltbreite ausbilden kann. Der erste Druckraum und die zweiten Druckräume sind über einen durch das erste Gleitlagersegment verlaufenden Kanal verbunden, so dass die zweiten Druckräume über die Kanäle mit Schmiermittel versorgt werden kann. Über die Kanäle kann ein Druckausgleich zwischen dem ersten Druckraum und den zweiten Druckräumen erfolgen. Es ist bei der erfindungsgemäßen Lageranordnung nicht erforderlich, separate Federn zur elastischen Lagerung der ersten Gleitlagersegmente vorzusehen. Es ergibt sich ein geringerer Montage- und Wartungsaufwand. Ferner kann über die erfindungsgemäße Lageranordnung die Dämpfung unerwünschter Schwingungen ermöglicht werden, so dass eine verbesserte Laufruhe erhalten werden kann.

Bevorzugt erstreckt sich das erste Gleitlagersegment nicht über den gesamten Umfang des ersten Lagerrings. Das bedeutet, dass sich das erste Gleitlagersegment in Umfangsrichtung des ersten Lagerrings bevorzugt nicht über den gesamten ersten Lagerring erstreckt.

Der erste Lagerring kann ein Innenring und der zweite Lagerring ein Außenring der Lageranordnung sein. Alternativ kann der erste Lagerring ein Außenring und der zweite Lagerring ein Innenring sein. Entweder der erste Lagerring oder der zweite Lagerring kann als geteilter Lagerring mit mehreren Lagerringteilen ausgebildet sein, um die Montage der Lageranordnung zu vereinfachen. Beispielsweise kann der zweite Lagerring einstückig ausgebildet sein und der erste Lagerring in einer axialen Richtung, also in einer Richtung parallel zur Drehachse, geteilt sein. Alternativ kann der erste Lagerring einstückig ausgebildet sein und der zweite Lagerring in axialer Richtung geteilt sein.

Gemäß einer vorteilhaften Ausgestaltung der Erfindung sind an dem ersten Lagerring mehrere hydrostatisch abgestützte erste Gleitlagersegmente angeordnet, die in einer Umfangsrichtung des ersten Lagerrings voneinander beabstandet sind und mit einer an dem zweiten Lagerring angeordneten ersten Gleitfläche zusammenwirken. Durch die mehreren, entlang der Umfangsrichtung voneinander beabstandet angeordneten Gleitlagersegmente kann sich der die Lagerringe trennende Schmiermittelspalt an den Gleitlagersegmenten individuell einstellen. Es ist daher möglich, einer durch eine unsymmetrische Belastung entstehende, unterschiedliche Breite des Schmierspalts in Umfangsrichtung entgegenzuwirken, so dass ein über die Umfangsrichtung möglichst gleichmäßiger Schmiermittelspalt mit reduziertem Schmiermitteldurchsatz erhalten wird. Bevorzugt sind sämtliche erste Gleitlagersegmente identisch ausgebildet. Besonders bevorzugt bilden die ersten Gleitlagersegmente eine in der Umfangsrichtung verlaufende erste Gleitlagersegmentreihe, wobei die ersten Gleitlagersegmente mit derselben ersten Gleitfläche zusammenwirken. Alternativ können die ersten Gleitlagersegmente unterschiedlich ausgebildet sein. Beispielsweise können die ersten Gleitlagersegmente unterschiedliche Querschnitte aufweisen und/oder unterschiedlich große, gegenüber der Gleitfläche wirksame Oberflächen.

Vorteilhaft kann das erste Gleitlagersegment eine erste Druckfläche aufweisen, die dem ersten Druckraum zugewandt ist und eine zweite Druckfläche, die dem zweiten Druckraum zugewandt ist, wobei die erste Druckfläche kleiner als die zweite Druckfläche ist. Bei gleichem Druck in dem ersten und dem zweiten Druckraum kann durch eine derartige Dimensionierung der Druckflächen erreicht werden, dass die auf die zweite Druckfläche wirkende Kraft größer ist als die Kraft, die auf die erste Druckfläche wirkt. Das Gleitlagersegment wird daher selbsttätig von der Gleitfläche des zweiten Lagerrings weggedrückt, wodurch der Druck im zweiten Druckraum durch ablaufendes Schmiermittel abnimmt bis ein Kraftgleichgewicht zwischen den beiden Kräften erreicht ist. Das Gleitlagersegment kann in dem Gleichgewichtszustand eine Stellung einnehmen, in welcher ein ausreichender Schmiermittelspalt als Trennung zwischen dem Gleitlagersegment und der Gleitfläche vorhanden ist. Hierdurch kann verhindert werden, dass das Gleitlagersegment in unerwünschte Anlage mit der Gleitfläche an dem zweiten Lagerring kommt, so dass ein verschleißfreier Betrieb ermöglicht wird. Eine derartige Ausgestaltung ist für große Lageranordnungen, insbesondere mit einem Durchmesser im Bereich von 1 m bis 10 m, vorteilhaft. Bei großen Lageranordnungen variiert oftmals die Breite des Schmiermittelspalts in Umfangsrichtung aufgrund von Fertigungsabweichungen oder belastungsabhängigen Verformungen. Durch das sich selbsttätig in den Gleichgewichtszustand bringende Gleitlagersegment kann die Funktionsfähigkeit derartiger Lageranordnungen gewährleistet werden.

Anstelle eines einzigen zweiten Druckraums sind erfindungsgemäß mehrere zweite Druckräume vorgesehen. Dabei ist die Summe der Druckflächen der mehreren zweiten Druckräume größer als die erste Druckfläche.

Das Verhältnis der ersten Druckfläche zu der Summe der mehreren zweiten Druckflächen beträgt also weniger als 1 und liegt bevorzugt im Bereich zwischen 0,5 und 1, besonders bevorzugt im Bereich zwischen 0,7 und 1.

Bevorzugt sind die zweiten Druckflächen des ersten Gleitlagersegments durch einen Randvorsprung begrenzt, so dass ein seitliches Ausfließen des Schmiermittels aus der zweiten Druckkammer gehemmt wird. Der Randvorsprung kann vollständig um die Druckfläche umlaufend angeordnet sein. Bevorzugt weist der Randvorsprung eine Krümmung auf, deren Verlauf an die Krümmung der Gleitfläche des zweiten Lagerrings angepasst ist. Besonders bevorzugt, sind die Krümmung des Randvorsprungs und der Gleitfläche identisch, so dass der Randvorsprung bei Stillstand der Lageranordnung an der Gleitfläche anliegt.

Gemäß einer vorteilhaften Ausgestaltung der Erfindung ist in dem Kanal eine Querschnittsverengung, insbesondere eine Strömungsdrossel, angeordnet. Über die Querschnittsverengung kann der Austausch von Schmiermittel zwischen der ersten Druckkammer und der zweiten Druckkammer, d.h. zwischen der Vorder- und der Rückseite des Gleitlagerelements, eingestellt werden. Bevorzugt ist die Querschnittsverengung derart ausgebildet, dass zwischen dem Gleitlagersegment und der Gleitfläche des zweiten Lagerrings ein ausreichend bemessener Schmiermittelspalt vorhanden ist.

Vorteilhaft ist es, wenn zwischen dem Gleitlagersegment und dem ersten Lagerring, insbesondere der Aufnahmetasche, ein Dichtelement angeordnet ist, so dass ein unerwünschtes Ausströmen von Schmiermittel aus der ersten Druckkammer, d.h. von der Rückseite des Gleitlagersegments um dieses herum, verhindert werden kann. Durch das Dichtelement kann erreicht werden, dass ein Austausch von Schmiermittel im Wesentlichen, bevorzugt ausschließlich, über den Kanal des Gleitlagersegments erfolgen kann.

Erfindungsgemäß ist vorgesehen, dass das erste Gleitlagersegment derart ausgebildet ist, dass zwischen dem ersten Gleitlagersegment und dem zweiten Lagerring mehrere, insbesondere drei oder vier, zweite Druckräume gebildet sind, wobei der erste Druckraum und die mehreren zweiten Druckräume über mehrere durch das erste Gleitlagersegment verlaufende Kanäle verbunden sind. Das Gleitlagersegment kann auf seiner der Gleitfläche des zweiten Lagerrings zugewandten Seite mehrere Vorsprünge aufweisen, die seitliche Begrenzungen für mehrere, insbesondere drei oder vier, zweite Druckräume bilden. Durch die mehreren, zwischen dem ersten Gleitlagersegment und dem zweiten Lagerring gebildeten, zweiten Druckräume kann ein unerwünschtes Verkippen des Gleitlagersegments gegenüber dem zweiten Lagerring verringert werden. Das bedeutet, dass auch bei einem Störfall in der Druckversorgung, beispielsweise einem Druckabfall, eine Berührung des zweiten Lagerrings durch ein verkipptes Gleitlagersegment verhindert werden kann.

In diesem Zusammenhang ist es bevorzugt, dass in jedem Kanal eine Querschnittsverengung, insbesondere eine Strömungsdrossel, angeordnet ist, so dass der Austausch von Schmiermittel zwischen der ersten Druckkammer und den anderen, insbesondere einer zweiten, dritten, vierten und fünften Druckkammer, eingestellt werden kann. Bevorzugt sind die Querschnittsverengungen derart ausgebildet, dass zwischen dem Gleitlagersegment und der Gleitfläche des zweiten Lagerrings ein ausreichend bemessener Schmiermittelspalt vorhanden ist. Die Querschnittsverengungen können unterschiedlich ausgebildet sein.

Gemäß einer vorteilhaften Ausgestaltung ist an dem ersten Lagerring mindestens ein hydrostatisch abgestütztes zweites Gleitlagersegment angeordnet, das mit einer an dem zweiten Lagerring angeordneten zweiten Gleitfläche zusammenwirkt. Bevorzugt ist die zweite Gleitfläche in axialer Richtung von der ersten Gleitfläche beabstandet.

Gemäß einer vorteilhaften Ausgestaltung sind an dem ersten Lagerring mehrere hydrostatisch abgestützte zweite Gleitlagersegmente angeordnet, die in einer Umfangsrichtung des ersten Lagerrings voneinander beabstandet sind und mit einer an dem zweiten Lagerring angeordneten zweiten Gleitfläche zusammenwirken. Bevorzugt bilden die zweiten Gleitlagersegmente eine in der Umfangsrichtung verlaufende zweite Gleitlagersegmentreihe, wobei erste Gleitsegmentlagerreihe die zweite Gleitlagersegmentreihe in einer parallel zu einer Drehachse der Lageranordnung verlaufenden axialen Richtung voneinander beabstandet sind. Bevorzugt sind sämtliche zweite Gleitlagersegmente identisch ausgebildet. Vorteilhaft ist es wenn die ersten Gleitlagersegmente und die zweiten Gleitlagersegmente identisch ausgebildet sind. Optional kann eine dritte Gleitlagersegmentreihe mit dritten Gleitlagersegmenten oder weitere Gleitlagersegmentreihen mit entsprechenden Gleitlagersegmenten vorgesehen sein.

In diesem Zusammenhang ist es vorteilhaft, wenn die ersten Gleitlagersegmente und die zweiten Gleitlagersegmente hinsichtlich einer senkrecht zu einer Drehachse der Lageranordnung angeordneten Radialebene asymmetrisch angeordnet sind. Eine derartige Ausgestaltung ermöglicht bei stationärer Anordnung des ersten Lagerrings eine Anpassung an zu erwartende unsymmetrische Krafteinwirkungen. Bevorzugt ist es, wenn die erste Gleitlagersegmentreihe einen ersten kreisringsegmentförmigen Bereich mit mehreren ersten Gleitlagersegmenten aufweist und einen zweiten kreisringsegmentförmigen Bereich, in welchem keine ersten Gleitlagersegmente angeordnet sind, und die zweite Gleitlagersegmentreihe einen dritten kreisringsegmentförmigen Bereich, der mehrere zweite Gleitlagersegmente aufweist, und einen vierten kreisringsegmentförmigen Bereich aufweist, in welchem keine zweiten Gleitlagersegmente angeordnet sind, wobei der erste kreisringsegmentförmige Bereich und der dritte kreisringsegmentförmige Bereich nicht symmetrisch bezüglich der Radialebene angeordnet sind. Alternativ ist es möglich, dass die zweiten Gleitlagersegmente gegenüber den ersten Gleitlagersegmenten einen Versatz in Umfangsrichtung aufweisen.

Das erste Gleitlagersegment und/oder das zweite Gleitlagersegment weist bevorzugt einen kreisrunden Querschnitt auf. Die erste Druckfläche und/oder die zweite Druckfläche des entsprechenden Gleitlagersegments können insofern kreisförmig sein. Alternativ kann das erste Gleitlagersegment und/oder das zweite Gleitlagersegment einen elliptischen oder eckigen, beispielsweise drei-, vier- oder mehreckigen, Querschnitt aufweisen.

Gemäß einer vorteilhaften Ausgestaltung ist das erste Gleitlagersegment und/oder das zweite Gleitlagersegment aus Bronze gebildet. Alternativ kann das erste und/oder zweite Gleitlagersegment eine Beschichtung aus Weißmetall aufweisen.

Gemäß einer vorteilhaften Ausgestaltung weist die Lageranordnung mindestens eine Wälzkörperreihe mit mehreren Wälzkörpern auf, die an einer ersten Laufbahn des ersten Lagerrings und an einer zweiten Laufbahn des zweiten Lagerrings abrollbar angeordnet sind. Eine derartige Ausgestaltung stellt eine hybride Lageranordnung mit mindestens einem Wälzlager und mindestens einem hydrostatischen Gleitlager dar. Bei eine solchen Lageranordnung sind an dem ersten Lagerring sowohl die ersten Laufbahn für die Wälzkörper der ersten Wälzkörperreihe als auch die Gleitlagersegmente angeordnet. An dem zweiten Lagerring sind sowohl die zweite Laufbahn für die Wälzkörper als auch die Gleitfläche zum Zusammenwirken mit den Gleitlagersegmenten vorgesehen. Insofern wird ein steifes Lager gebildet, bei welchem Kräfte über die Wälzkörper bzw. die hydrostatische Gleitlagerung zwischen dem ersten und dem zweiten Lagerring übertragbar sind. Die hydrostatischen Gleitlagersegmente können auch bei Stillstand und bei geringen Drehzahlen der Lagerringe gegeneinander Kräfte zwischen den Lagerringen übertragen. Bei einem Ausfall der Schmiermittelversorgung für die hydrostatischen Gleitlagersegmente können die Kräfte ausschließlich über die Wälzkörper übertragen werden, so dass ein reiner Wälzlagerbetrieb zumindest zeitweise möglich ist.

Gemäß einer vorteilhaften Ausgestaltung ist der erste Lagerring als feststehender Lagerring ausgebildet und der zweite Lagerring ist gegenüber dem ersten Lagerring drehbar.

Die erste Gleitfläche und/oder die zweite Gleitfläche ist bevorzugt zylinderringförmig ausgestaltet.

Bevorzugt sind die Wälzkörper als Kegelrollen ausgebildet. Alternativ können die Wälzkörper als Kugeln, Zylinderrollen oder Tonnenrollen ausgebildet sein. Die Lageranordnung kann optional mehrere Wälzkörperreihen - jeweils mit mehreren Wälzkörpern - aufweisen, die an weiteren Laufbahnen des ersten Lagerrings und an weiteren Laufbahnen des zweiten Lagerrings abrollbar angeordnet sind. Bevorzugt sind die Wälzkörperreihen derart angeordnet, dass die Lageranordnung ein Axial-Radial-Lager bildet, welches sowohl Kräfte in axialer Richtung als auch in radialer Richtung aufnehmen kann. Bevorzugt sind die Drehachsen der Wälzkörper der Wälzkörperreihen sowohl gegenüber der axialen Richtung als auch gegenüber der radialen Richtung geneigt angeordnet, so dass die Wälzkörper Kräfte in radialer Richtung und axiale Richtung aufnehmen können. Alternativ können die Drehachsen der Wälzkörper einer ersten Wälzkörperreihe in axialer Richtung und die Drehachsen der Wälzkörper einer zweiten Wälzkörperreihe in radialer Richtung ausgerichtet sein.

Der erste Lagerring der Lageranordnung ist bevorzugt als feststehender Lagerring ausgebildet. Beispielsweise kann der erste Lagerring mit einer Tragstruktur der Windenergieanlage, beispielsweise mit einer Gondel einer Windenergieanlage, verbunden sein. Der zweite Lagerring ist bevorzugt drehfest mit der Rotorwelle verbunden.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den Erfindungsgedanken nicht einschränken.

### Kurze Beschreibung der Figuren

Die **Figur 1** zeigt ein Ausführungsbeispiel einer Windenenergieanlage gemäß der Erfindung.
Die **Figur 2** zeigt ein erstes Beispiel einer Lageranordnung in einer Schnittdarstellung entlang einer die Drehachse einschließenden Axialebene.
Die **Figur 3** zeigt ein Detail der Darstellung aus Figur 2.
Die **Figur 4** zeigt eine Schnittdarstellung entlang der in Figur 2 gezeigten Radialebene IV-IV.
Die **Figur 5** zeigt das in Figur 4 markierte Detail V.
Die **Figur 6** zeigt ein zweites Beispiels einer Lageranordnung in einer Schnittdarstellung entlang einer die Drehachse einschließenden Axialebene.
Die **Figur 7** zeigt ein Detail der Darstellung aus Figur 6.
Die **Figur 8** zeigt ein Gleitlagersegment gemäß einem ersten Beispiel in einer Aufnahmetasche in einer Schnittdarstellung.
Die **Figur 9** zeigt das Gleitlagersegment nach Figur 8 in einer Schnittdarstellung.
Die **Figur 10** zeigt das Gleitlagersegment nach Figur 8 in einer perspektivischen Darstellung.
Die **Figur 11** zeigt ein Gleitlagersegment gemäß einem Ausführungsbeispiel der Erfindung in einer perspektivischen Darstellung.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

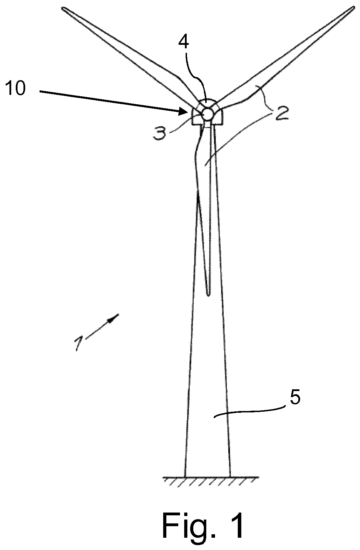

In der **Figur 1** ist eine Windenergieanlage 1 gezeigt, die einen Turm 5 und eine gegenüber dem Turm 5 drehbar angeordneten Gondel 4 aufweist. An der Gondel 4 ist ein Rotor 3 mit einer Rotorwelle drehbar gelagert. Die Rotorwelle ist über eine erfindungsgemäße Lageranordnung 10 gelagert. Hierbei ist ein erster Lagerring 11 der Lageranordnung 10 als feststehender Lagerring ausgebildet. Ein zweiter Lagerring 12. Welcher gegenüber dem ersten Lagerring 10 drehbar ist, ist drehfest mit der Rotorwelle verbunden. An dem Rotor 3 sind mehrere Rotorblätter 2 vorgesehen.

Die Lageranordnung 10 ist als Großwälzlager mit einem Durchmesser im Bereich von 1 m bis 10 m, bevorzugt von 3 m bis 7 m, besonders bevorzugt von 4 m bis 6 m, beispielsweise 2,5 m ausgebildet. Nachfolgend sollen verschiedene Ausführungsbeispiele von Lageranordnungen 10 beschrieben werden, welche den Rotor 3 drehbar mit der Gondel 4 verbinden.

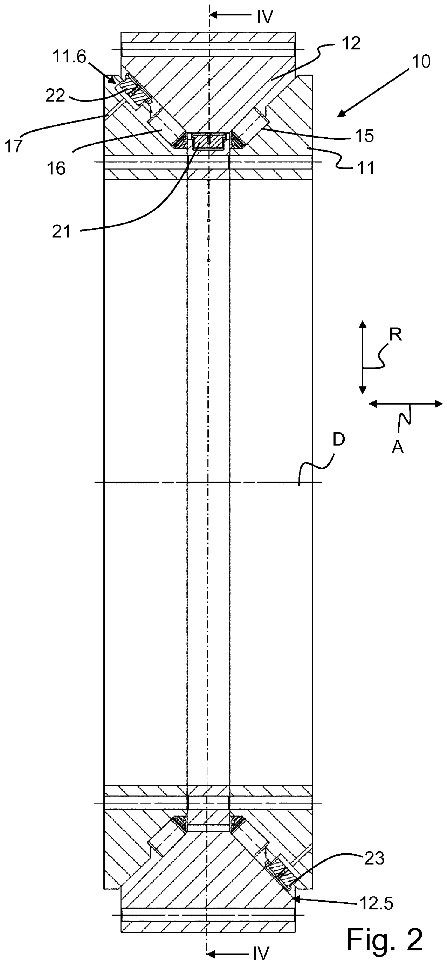

Die **Figuren 2 bis 5** zeigen ein erstes Beispiel einer Lageranordnung 10 mit einem ersten, feststehenden Lagerring 11, der als Innenring ausgebildet ist. Um die Montage der Lageranordnung 10 zu vereinfachen, ist der erste Lagerring als in axialer Richtung A geteilter Lagerring ausgebildet und weist mehrere Lagerteile 11.1, 11.2, 11.3 auf. Ferner weist die Lageranordnung 10 einen als Außenring ausgebildeten zweiten Lagerring 12 auf, welcher gegenüber dem ersten Lagerring 11 um eine Drehachse D drehbar gelagert ist. Der zweite Lagerring 12 umgibt den ersten Lagerring 11 konzentrisch. Zwischen den Lagerringen 11, 12 sind zwei Wälzlagerreihen 13, 14 angeordnet. Jede der Wälzlagerreihen 13, 14 weist mehrere Wälzkörper 15, 16 auf, die zueinander beabstandet angeordnet sind. Der Abstand zwischen den Wälzkörpern kann durch in den Zeichnungen nicht dargestellte Distanzstücke oder einen Käfig eingestellt werden. Die Wälzkörper 15, 16 der Wälzkörperreihen 13, 14 sind derart angeordnet, dass sie an einer ersten Laufbahn 11.4, 11.5 des ersten Lagerrings 11 und an einer zweiten Laufbahn 12.1, 12.2 des zweiten Lagerrings 12 abrollbar angeordnet sind. Bei den Wälzkörpern 15, 16 der Wälzkörperreihen 13, 14 handelt es sich um Kegelrollen. Die Wälzkörper 15, 16 der Wälzkörperreihen sind identisch ausgebildet. Die Wälzkörperreihen 13, 14 sind derart angeordnet, dass die Lageranordnung ein Axial-Radial-Lager bildet, welches sowohl Kräfte in axialer Richtung A als auch in radialer Richtung R aufnehmen kann. Gemäß dem Beispiel sind die Drehachsen der Wälzkörper 15, 16 sowohl gegenüber der axialen Richtung A als auch gegenüber der radialen Richtung geneigt angeordnet.

Bei der Lageranordnung 10 handelt es sich um eine Hybrid-Lageranordnung, welche zusätzlich zu den Wälzkörperreihen 13, 14 mehrere aus Gleitlagersegmenten 21, 22, 23 gebildete Gleitlagersegmentreihen aufweist, wobei sowohl die Wälzkörper 15, 16 als auch die Gleitlagersegmente mit dem zweiten Lagerring 12 zusammenwirken. Eine erste Gleitlagersegmentreihe ist aus mehreren an dem ersten Lagerring 11 angeordneten, hydrostatisch abgestützten ersten Gleitlagersegmenten 21 gebildet, die in einer Umfangsrichtung des ersten Lagerrings 11 voneinander beabstandet sind. Die ersten Gleitlagersegmente 21 wirken mit einer an dem zweiten Lagerring 12 angeordneten ersten Gleitfläche 12.3 zusammen, wobei zwischen den ersten Gleitlagersegmenten 21 und der ersten Gleitfläche 12.3 ein Schmierspalt ausgebildet ist, der mit einem Schmiermittel, beispielsweise einem Öl, gefüllt ist. Die erste Gleitfläche 12.3 ist zylinderringförmig ausgestaltet. Das Schmiermittel wird aktiv über eine Schmiermittelversorgung, beispielsweise eine Ölpumpe, zugeführt. Die Zuführung des Schmiermittels erfolgt über einen Zuführkanal 17 in dem ersten Lagerring 11 der in einer Aufnahmetasche 11.6 in des ersten Lagerrings 1 mündet. Die hydrostatischen Gleitlagersegmente 21 übertragen auch bei Stillstand oder bei geringen Drehzahlen der Lagerringe 11, 12 Kräfte zwischen den Lagerringen 11, 12. Da entlang der Umfangsrichtung mehrere beabstandet angeordnete Gleitlagersegmente 21 angeordnet sind, kann sich der Schmiermittelspalt an den Gleitlagersegmente individuell einstellen, so dass ein über die Umfangsrichtung vergleichmäßigter Schmiermittelspalt mit reduziertem Schmiermitteldurchsatz erhalten wird.

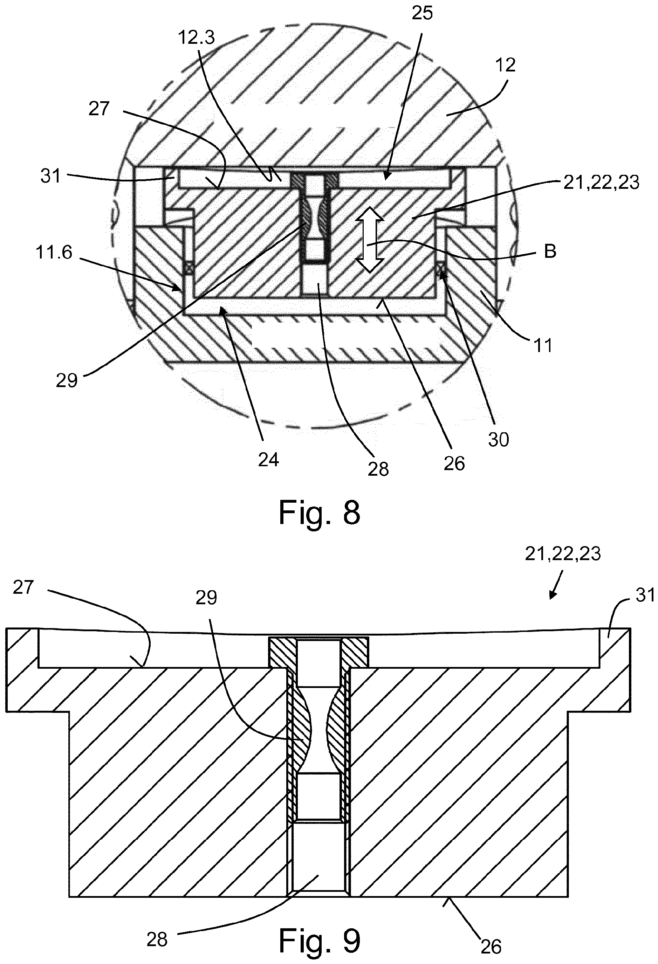

Anhand des in **Figur 8** exemplarisch gezeigten Beispiels eines Gleitlagersegments 21, 22, 23 soll nachfolgend eine mögliche Ausgestaltung des ersten Gleitlagersegments 21 erläutert werden. Die ersten Gleitlagersegmente 21 sind derart in der Aufnahmetasche 11.6 des ersten Lagerrings 11 aufgenommen, dass zwischen dem ersten Lagerring 1 und dem jeweiligen ersten Gleitlagersegment 21 ein erster Druckraum 24 gebildet ist. Ferner ist das erste Gleitlagersegment 21 derart ausgebildet, dass zwischen dem ersten Gleitlagersegment 21 und dem zweiten Lagerring 12 ein zweiter Druckraum 25 gebildet ist. Der zweite Druckraum wird durch die zweite Druckfläche 27 des Gleitlagersegments 21, einen um die zweite Druckfläche 27 umlaufenden Randvorsprung 31 sowie die Gleitfläche 12.3 an dem zweiten Lagerring 12 begrenzt. Der erste Druckraum 24 und der zweite Druckraum 25 sind über einen durch das erste Gleitlagersegment verlaufenden Kanal 28 verbunden, so dass ein Schmiermittelaustausch zwischen der Vorderseite und der Rückseite des ersten Gleitlagersegments 21 möglich ist. Zwischen dem ersten Gleitlagersegment 21 und dem ersten Lagerring 11 ist ein Dichtelement 30 angeordnet. Das Dichtelement 30 liegt an einer Innenkontur der der Aufnahmetasche 11.6 an und verhindert ein unerwünschtes Ausströmen von Schmiermittel aus dem ersten Druckraum 24. Insofern ist ein Austausch von Schmiermittel zwischen dem ersten Druckraum 24 und dem zweiten Druckraum 25 ausschließlich über den Kanal 28 des ersten Gleitlagersegments 21 möglich. In dem Kanal 28 ist eine als Strömungsdrossel ausgebildete Querschnittsverengung 29 angeordnet.

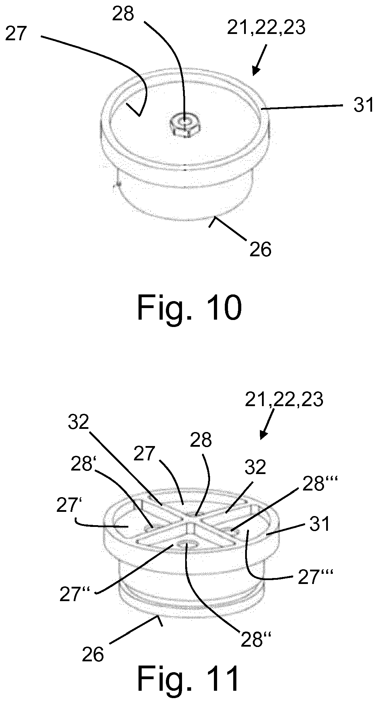

An seiner Rückseite weist das erste Gleitlagersegment 21 eine erste Druckfläche 26 auf, welche dem ersten Druckraum 24 zugewandt ist. An der Vorderseite ist des ersten Gleitlagersegments ist eine zweite Druckfläche 27 vorgesehen, die dem zweiten Druckraum 25 zugewandt ist. Wie in anhand der Darstellung in den **Figuren 9** **und** **10** erkennbar wird, ist die ersten Druckfläche 26 kleiner als die zweite Druckfläche 27. Über den Kanal 28 kann ein Druckausgleich zwischen dem ersten und dem zweiten Druckraum 24, 25 erfolgen, so dass ein im Wesentlichen identischer Druck in dem ersten und dem zweiten Druckraum 24, 25 herrscht. Durch die Dimensionierung der Druckflächen 26, 27 wird nun erreicht, dass die auf die zweite Druckfläche 27 wirkende Kraft größer ist als die Kraft, die auf die erste Druckfläche 26 wirkt. Das erste Gleitlagersegment 21 wird daher selbststätig von der Gleitfläche 12.3 des zweiten Lagerrings 12 weggedrückt, wodurch der Druck im zweiten Druckraum 25 durch ablaufendes Schmiermittel abnimmt bis ein Kraftgleichgewicht zwischen den beiden Kräften erreicht ist. Insofern wird das Gleitlagersegment in einer Bewegungsrichtung B bewegt, die senkrecht zu der Gleitfläche 12.3 ausgerichtet ist. Das Gleitlagersegment 21 kann in dem Gleichgewichtszustand eine Stellung einnehmen, in welcher ein ausreichender Schmiermittelspalt zwischen dem Gleitlagersegment und der Gleitfläche vorhanden ist. Hierdurch wird verhindert, dass das Gleitlagersegment 21 in unerwünschte Anlage mit der Gleitfläche 12.3 an dem zweiten Lagerring 12 kommt, so dass ein verschleißfreier Betrieb ermöglicht wird. Die Lage des Gleitlagersegments 21 im Gleichgewichtszustand und/oder die Breite des Schmiermittelspalts kann durch die Einstellung des Schmiermittelstrom durch die Zuführung 17, die Wahl einer geeigneten Querschnittsverengung 29 sowie das Verhältnis der Druckflächen 26, 27 zueinander beeinflusst werden.

Sind anstelle eines einzigen zweiten Druckraums 25 mehrere zweite Druckräume vorgesehen, so ist die Summe der zweiten Druckflächen der mehreren zweiten Druckräume größer ausgebildet als die erste Druckfläche 26. Eine derartige Ausführungsform ist in **Figur 11** dargestellt.

Das in den **Figuren 8, 9** **und** **10** gezeigte Gleitlagersegment 21 weist einen kreisförmigen Querschnitt auf, d.h. dass die erste und zweite Druckfläche 26, 27 kreisförmig ist. In Abweichung von dieser Ausgestaltung kann das Gleitlagersegment 21 einen anderen Querschnitt aufweisen, beispielsweise einen drei-, vier- oder mehreckigen Querschnitt.

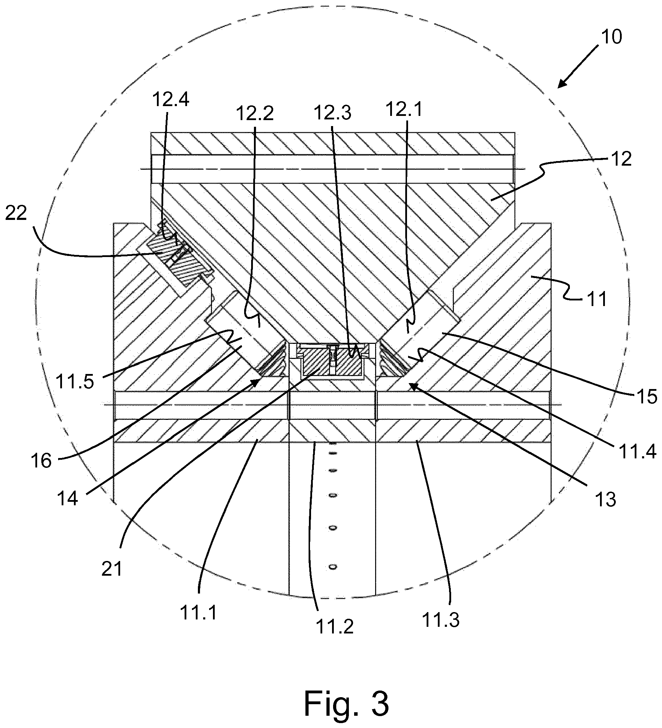

Wie der Darstellung in den **Figuren 2** **und** **3** weiter entnommen werden kann, sind die Laufbahnen 12.1, 12.2 der Wälzkörperreihen 13, 14 in einem Winkel gegenüber einer Radialebene angeordnet, welcher im Bereich zwischen 0° und 90°, bevorzugt zwischen 30° und 60°, besonders bevorzugt zwischen 40° und 50°, beispielsweise bei 45° liegt. Die erste Gleitfläche 12.3 ist parallel zu der Drehachse D ausgerichtet, so dass über die ersten, hydrostatischen Gleitlagersegmente 21 im Wesentlichen in radialer Richtung R wirkende Kräfte übertragen werden.

Ferner sind an dem ersten Lagerring 11 mehrere hydrostatisch abgestützte, zweite Gleitlagersegmente 22 einer zweiten Gleitlagersegmentreihe sowie mehrere hydrostatisch abgestützte, dritte Gleitlagersegmente 23 einer dritten Gleitlagersegmentreihe angeordnet. Die erste Wälzkörperreihe 15 ist zwischen der ersten und dritten Gleitlagersegmentreihe und die zweite Wälzkörperreihe ist zwischen der ersten und der zweiten Gleitlagersegmentreihe angeordnet. Die zweiten und dritten Gleitlagersegmente 22, 23 sind bevorzugt identisch zu den erste Gleitlagersegmenten 21 ausgebildet, so dass die Ausführungen zu den **Figuren 8 bis 10** auch für diese Gleitlagersegmente gelten. Alternativ können die Gleitlagersegmente 21, 22, 23 der einzelnen Gleitlagersegmentreihen unterschiedlich ausgestaltet sein. Die zweiten Gleitlagersegmente 22 wirken mit einer zweiten Gleitfläche 12.4 zusammen, welche an dem zweiten Lagerring 12 vorgesehen ist. Die dritten Gleitlagersegmente 23 wirken mit einer dritten Gleitfläche 12.5 des zweiten Lagerrings 12 zusammen. Die zweite und die dritte Gleitfläche 12.4, 12.5 sind in einem Winkel gegenüber einer Radialebene angeordnet, welcher identisch zu dem Winkel ist, welchen die Laufbahnen 12,1, 12,2 gegenüber der Radialebene einschließen. Dieser Winkel liegt im Bereich zwischen 0° und 90°, bevorzugt zwischen 30° und 60°, besonders bevorzugt zwischen 40° und 50°, beispielsweise bei 45° liegt. Insofern weist der zweite Lagerring 12 einen im Wesentlichen V-förmigen oder trapezförmigen Querschnitt auf.

Bei dem ersten Beispiel sind ersten Gleitlagersegmente 21 in axialer Richtung R bewegbar gelagert so dass der Schmiermittelspalt zwischen dem Gleitlagersegment 21 und der Gleitfläche 12.3 durch eine Bewegung des Gleitlagersegments 21 entlang der Bewegungsrichtung eingestellt werden kann. Die Bewegungsrichtung ist senkrecht zu der ersten Gleitfläche 12.3 orientiert. Die zweiten Gleitlagersegmente 22 und die dritten Gleitlagersegmente 23 sind jeweils ebenfalls in einer senkrecht zu der jeweiligen Gleitfläche 12.4, 12.5 ausgerichteten Bewegungsrichtung bewegbar gelagert. Die Lagerung der Gleitlagersegmente 21, 22, 23 ermöglich ferner ein gewisses Verkippen der Gleitlagersegmente 21, 22, 23 um eine Kippachse, die senkrecht zu der jeweiligen Bewegungsrichtung ausgerichtet ist.

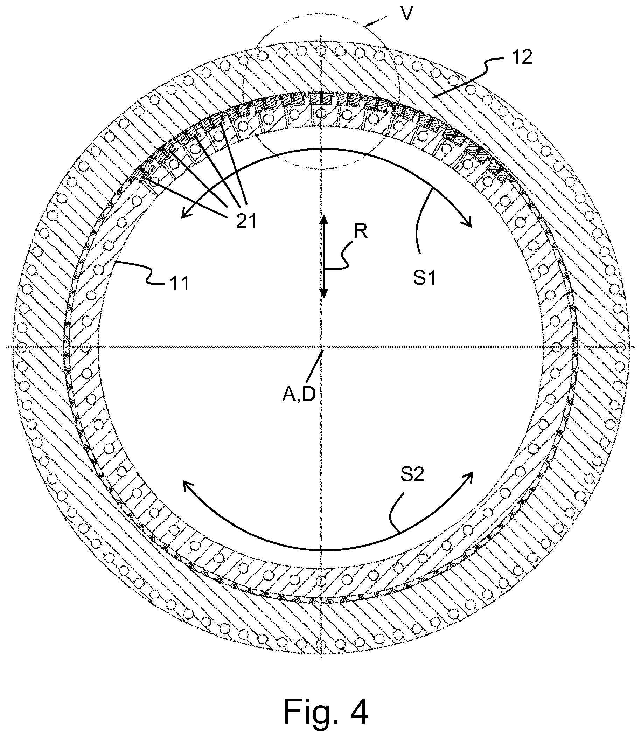

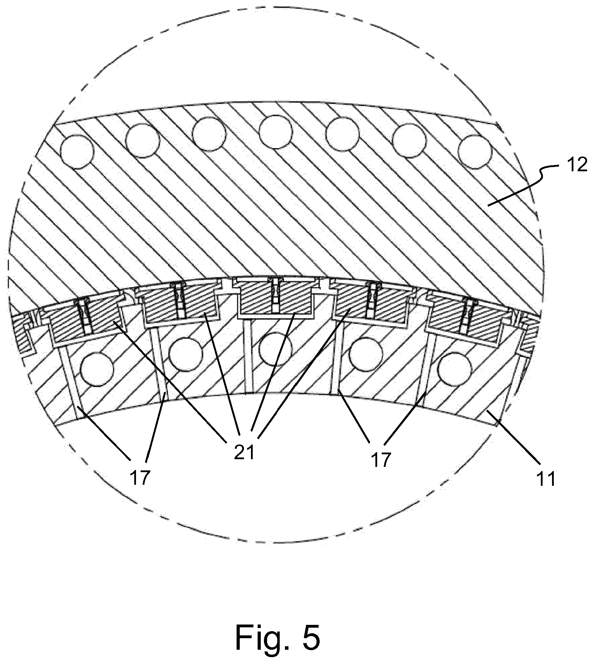

Wie in den Darstellungen in den **Figuren 4** **und** **5** gezeigt wird, sind die ersten Gleitlagersegmente 21 entlang der Umfangsrichtung des ersten Lagerrings 11 im Wesentlichen ungleichmäßig über den gesamten ersten Lagerring 11 verteilt angeordnet. Der erste Lagerring 11 weist entlang der Umfangsrichtung einen ersten, kreisringsegmentförmigen Bereich S1 mit mehreren ersten Gleitlagersegmenten 21 auf, der in Figur 4 oben gezeigt ist. Ferner ist ein zweiter, kreisringsegmentförmiger Bereich S2 vorgesehen, in welchem keine Gleitlagersegmente angeordnet sind. Der erste kreisringsegmentförmige Bereich S1 mit mehreren ersten Gleitlagersegmenten 21 ist bevorzugt in einem Abschnitt des ersten Lagerrings 11 angeordnet, in dem eine erhöhte Krafteinwirkung, z.B. Gewichtskrafteinwirkung, besteht.

Die Darstellung in **Figur 2** verdeutlicht, dass die zweiten Gleitlagersegmente 22 und die dritten Gleitlagersegmente 23 hinsichtlich einer senkrecht zu einer Drehachse der Lageranordnung angeordneten Radialebene asymmetrisch angeordnet sind. Eine derartige Ausgestaltung ermöglicht bei stationärer Anordnung des ersten Lagerrings 11 eine weitere Anpassung an zu erwartende unsymmetrische Krafteinwirkungen. Die zweite und die dritte Gleitlagersegmentreihe weisen jeweils einen ersten kreisringsegmentförmigen Bereich auf, in welchem mehrere Gleitlagersegmente 22, 23 angeordnet sind und einen zweiten kreisringsegmentförmigen Bereich, in welchem keine Gleitlagersegmente angeordnet. In der Darstellung in **Figur 2** ist der erste kreisringsegmentförmige Bereich der zweiten Gleitlagersegmentreihe oben und der erste kreisringsegmentförmige Bereich der dritten Gleitlagersegmentreihe unten angeordnet.

Die ersten Gleitlagersegmente 21 der ersten Gleitlagersegmentreihe sind entlang der Umfangsrichtung gleichmäßig über den gesamten ersten Lagerring verteilt angeordnet. Die erste Gleitlagersegmentreihe erstreckt sich in Umfangsrichtung also um den gesamten ersten Lagerring 11. Die ersten Gleitlagersegmente 21 sind jeweils in einem identischen Abstand zueinander angeordnet.

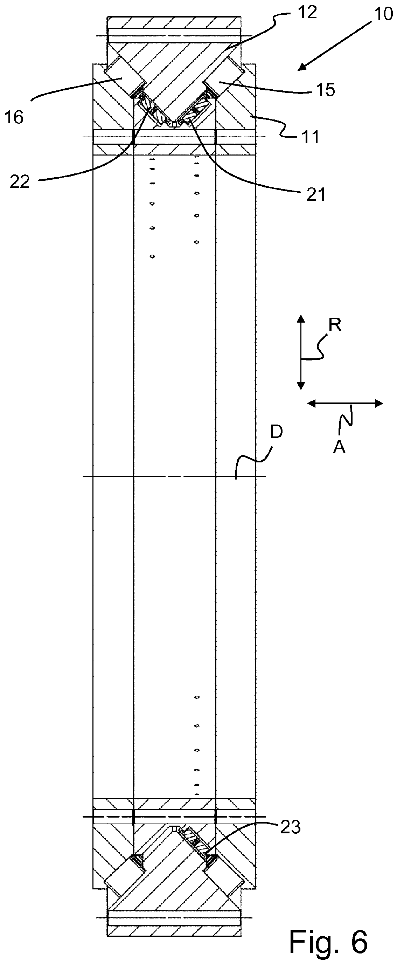

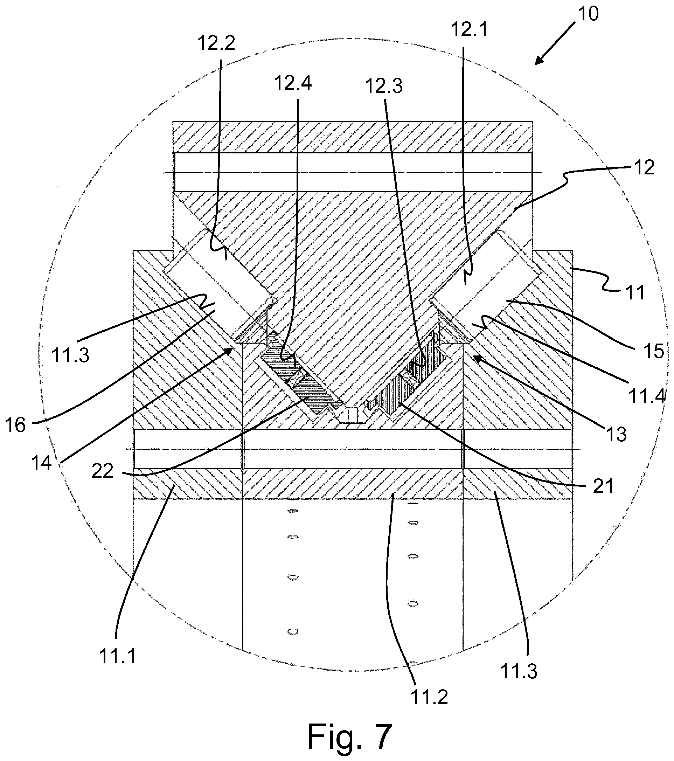

Die **Figuren 6** **und** **7** zeigen ein zweites Beispiel einer Lageranordnung 10. Im Unterschied zu dem ersten Beispiel weist die Lageranordnung 10 gemäß dem zweiten Beispiel zwei Wälzlager- und zwei Gleitlagersegmentreihen auf. Die erste Gleitlagersegmentreihe mit den ersten Gleitlagersegmenten 21 und die zweite Gleitlagersegmentreihe mit den ersten Gleitlagersegmenten 22 sind beide zwischen den Wälzlagerreihen 13, 14 angeordnet. Die ersten Gleitlagersegmente 21 wirken mit einer ersten Gleitfläche 12.3 des zweiten Lagerrings 12 zusammen und die zweiten Gleitlagersegmente 22 mit einer zweiten Gleitfläche 12.4. Die erste Gleitfläche 12.3 ist in einem Winkel gegenüber einer Radialebene angeordnet, welcher identisch zu dem Winkel ist, welchen die erste Laufbahn 12,1 mit er Radialebene einschließt. Die zweite Gleitfläche 12.4 ist in einem Winkel gegenüber einer Radialebene angeordnet, welcher identisch zu dem Winkel ist, welchen die zweite Laufbahn 12,2 gegenüber der Radialebene einschließt. Der Betrag dieser Winkel liegt im Bereich zwischen 0° und 90°, bevorzugt zwischen 30° und 60°, besonders bevorzugt zwischen 40° und 50°, beispielsweise bei 45° liegt. Insofern weist der zweite Lagerring 12 einen im Wesentlichen V-förmigen oder trapezförmigen Querschnitt auf.

Der Darstellung in **Figur 6** ist zu entnehmen, dass die ersten Gleitlagersegmente 21 der ersten Gleitlagersegmentreihe entlang der Umfangsrichtung gleichmäßig über den gesamten ersten Lagerring verteilt angeordnet sind. Die erste Gleitlagersegmentreihe erstreckt sich in Umfangsrichtung also um den gesamten ersten Lagerring 11. Die ersten Gleitlagersegmente 21 sind jeweils in einem identischen Abstand zueinander angeordnet. Die ersten und die zweiten Gleitlagersegmente 21, 22 sind hinsichtlich einer senkrecht zu einer Drehachse der Lageranordnung angeordneten Radialebene asymmetrisch angeordnet. Die zweite Gleitlagersegmentreihe weist einen ersten kreisringsegmentförmigen Bereich auf, in welchem mehrere Gleitlagersegmente 22 angeordnet sind und einen zweiten kreisringsegmentförmigen Bereich, in welchem keine Gleitlagersegmente angeordnet sind. In der Darstellung in **Figur 6** ist der erste kreisringsegmentförmige Bereich der zweiten Gleitlagersegmentreihe oben und der zweite kreisringsegmentförmige Bereich unten angeordnet.

Die **Figur 11** zeigt ein Gleitlagersegment 21, 22, 23 gemäß einem Ausführungsbeispiel in einer perspektivischen Darstellung. Im Gegensatz zu dem in den **Figuren 8, 9** **und** **10** gezeigten Gleitlagersegment 21, 22, 23 ist dieses Gleitlagersegment 21, 22, 23 derart ausgebildet, dass zwischen dem Gleitlagersegment 21, 22, 23 und dem zweiten Lagerring 11 mehrere, insbesondere vier, Druckräume gebildet sind. Die einzelnen Druckräume werden nach unten durch vier Druckflächen 27, 27', 27", 27"' und seitlich durch den Randvorsprung 31 sowie weitere Vorsprünge 32 begrenzt. Die Druckflächen 27, 27', 27", 27'" sind kreissektorförmig ausgebildet. Die Vorsprünge 32 teilen die Oberseite des Gleitlagersegments 21, 22, 23 in mehrere, insbesondere vier, Kreissektoren.

Die einzelnen Druckräume sind mit dem ersten Druckraum 24 an der Unterseite des Gleitlagersegments 21, 22, 23 über mehrere, durch das Gleitlagersegment 21, 22, 23 verlaufende Kanäle 28, 28', 28", 28'" verbunden. Insofern ist jeder Druckraum an der Oberseite des Gleitlagerelements über genau einen Kanal 28, 28', 28", 28'" mit dem ersten Druckraum 24 verbunden. Innerhalb der Kanäle 28, 28', 28", 28'" kann jeweils eine Querschnittsverringerung, insbesondere eine Strömungsdrossel, angeordnet sein.

Die Summe der Druckflächen 27, 27', 27", 27'" ist größer als die Druckfläche 26 des ersten Druckraums 24. Dadurch wird erreicht, dass die auf die zweiten Druckflächen 27, 27', 27", 27'" wirkende Kraft größer ist als die Kraft, die auf die erste Druckfläche 26 wirkt. Das Gleitlagersegment wird daher selbsttätig von der Gleitfläche des zweiten Lagerrings weggedrückt, wodurch der Druck in den zweiten Druckräumen durch ablaufendes Schmiermittel abnimmt bis ein Kraftgleichgewicht zwischen den beiden Kräften erreicht ist. Das Gleitlagersegment kann in dem Gleichgewichtszustand eine Stellung einnehmen, in welcher ein ausreichender Schmiermittelspalt als Trennung zwischen dem Gleitlagersegment und der Gleitfläche vorhanden ist. Hierdurch kann verhindert werden, dass das Gleitlagersegment in unerwünschte Anlage mit der Gleitfläche an dem zweiten Lagerring kommt, so dass ein verschleißfreier Betrieb ermöglicht wird.

Das Verhältnis der ersten Druckfläche 26 zu der Summe der mehreren zweiten Druckflächen 27, 27', 27", 27'" beträgt weniger als 1 und liegt bevorzugt im Bereich zwischen 0,5 und 1, besonders bevorzugt im Bereich zwischen 0,7 und 1.

Das in Figur 11 gezeigte Gleitlagersegment 21, 22, 23 kann bei den vorstehend beschriebenen Lageranordnungen 10 eingesetzt werden und bietet gegenüber dem in Figur 8, 9 und 10 gezeigten Gleitlagersegment 21, 22, 23 den Vorteil, dass die Neigung des Gleitlagersegments 21, 22, 23 zu einem Verkippen gegenüber der jeweiligen Gleitfläche 12.3, 12.4, 12.5 verringert werden kann.

Die Begriffe "erstes", "zweites", "drittes" und "viertes" in der Beschreibung und den Ansprüchen sollen das Unterscheiden ähnlicher Elemente voneinander ermöglichen und beschreiben keine bestimmte Abfolge dieser Elemente. Insbesondere dient die Nomenklatur der "ersten Gleitlagersegmente", "zweiten Gleitlagersegmente" und "dritten Gleitlagersegmente" lediglich der Zuweisung zu einer Gleitlagersegmentreihe. Die im Zusammenhang mit einer Gleitlagersegmentreihe beschrieben vorteilhaften Ausgestaltungen und Merkmale können auch bei den Gleitlagersegmenten der anderen Reihen Verwendung finden, soweit sie unter die vorliegenden Ansprüche fallen.

### Bezugszeichenliste

- 1: Windenergieanlage
- 2: Rotorblatt
- 3: Rotor
- 4: Gondel
- 5: Turm

- 10: Lageranordnung
- 11: Lagerring
- 11.1, 11.2, 11.3: Lagerringteil
- 11.4, 11.5: Laufbahn
- 11.6: Aufnahmetasche
- 12: Lagerring
- 12.1, 12.2: Laufbahn
- 12.3, 12.4, 12.5: Gleitfläche
- 13: Wälzkörperreihe
- 14: Wälzkörperreihe
- 15: Wälzkörper
- 16: Wälzkörper
- 17: Zuführung

- 21: Gleitlagersegment
- 22: Gleitlagersegment
- 23: Gleitlagersegment
- 24: Druckraum
- 25: Druckraum
- 26: Druckfläche
- 27: Druckfläche
- 27', 27", 27"': Druckfläche
- 28: Kanal
- 28', 28", 28'": Kanal
- 29: Querschnittsverengung
- 30: Dichtelement
- 31: Randvorsprung
- 32: Vorsprung

- A: axiale Richtung
- B: Bewegungsrichtung
- D: Drehachse
- R: radiale Richtung

## Patentansprüche

1. Windenergieanlage mit einer Rotorwelle, wobei die Rotorwelle gelagert ist über eine Lageranordnung (10) mit einem ersten Lagerring (11) und einem drehbar gegenüber dem ersten Lagerring (11) gelagerten zweiten Lagerring (12), wobei an dem ersten Lagerring (11) mindestens ein hydrostatisch abgestütztes erstes Gleitlagersegment (21, 22, 23) angeordnet ist, das mit einer an dem zweiten Lagerring (12) angeordneten ersten Gleitfläche (12.3, 12.4, 12.5) zusammenwirkt,
**dadurch gekennzeichnet, dass**
das erste Gleitlagersegment (21, 22, 23) derart in einer Aufnahmetasche (11.6) des ersten Lagerrings (11) aufgenommen ist, dass zwischen dem ersten Lagerring (11) und dem ersten Gleitlagersegment (21, 22, 23) ein erster Druckraum (24) gebildet ist und das erste Gleitlagersegment (21, 22, 23) derart ausgebildet ist, dass zwischen dem ersten Gleitlagersegment (21, 22, 23) und dem zweiten Lagerring (12) mehrere, insbesondere drei oder vier, zweite Druckräume (25) gebildet sind, wobei der erste Druckraum (24) und die mehreren zweiten Druckräume (25) über mehrere durch das erste Gleitlagersegment (21, 22, 23) verlaufende Kanäle (28, 28', 28", 28"') verbunden sind und das erste Gleitlagersegment (21, 22, 23) eine erste Druckfläche (26), die dem ersten Druckraum (24) zugewandt ist, und mehrere zweite Druckflächen (27, 27', 27", 27'"), die den zweiten Druckräumen (25) zugewandt sind, aufweist, wobei die erste Druckfläche (26) kleiner als die Summe der mehreren zweiten Druckflächen (27, 27', 27", 27'") ist.

2. Windenergieanlage nach Anspruch 1, **dadurch gekennzeichnet, dass** an dem ersten Lagerring (11) mehrere hydrostatisch abgestützte erste Gleitlagersegmente (21, 22, 23) angeordnet sind, die in einer Umfangsrichtung des ersten Lagerrings (11) voneinander beabstandet sind und mit einer an dem zweiten Lagerring (12) angeordneten ersten Gleitfläche (12.3, 12.4, 12.5) zusammenwirken.

3. Windenergieanlage nach einem der Ansprüche 1 bis 2, **dadurch gekennzeichnet, dass** die zweiten Druckflächen (27) des ersten Gleitlagersegments (21, 22, 23) durch einen Randvorsprung (31) begrenzt sind.

4. Windenergieanlage nach einem der vorhergehenden Ansprüche, **dadurch gekennzeichnet, dass** in dem Kanal (28) eine Querschnittsverengung (29), insbesondere eine Strömungsdrossel, angeordnet ist.

5. Windenergieanlage nach einem der vorhergehenden Ansprüche, **dadurch gekennzeichnet, dass** zwischen dem Gleitlagersegment (21, 22, 23) und dem ersten Lagerring (11), insbesondere der Aufnahmetasche (11.6), ein Dichtelement (30) angeordnet ist.

6. Windenergieanlage nach einem der vorhergehenden Ansprüche, **dadurch gekennzeichnet, dass** in jedem Kanal (28, 28', 28", 28"') eine Querschnittsverengung (29), insbesondere eine Strömungsdrossel, angeordnet ist, bevorzugt wobei die Querschnittsverengungen (29) unterschiedlich ausgebildet sind.

7. Windenergieanlage nach einem der vorhergehenden Ansprüche, **dadurch gekennzeichnet, dass** an dem ersten Lagerring (11) mindestens ein hydrostatisch abgestütztes zweites Gleitlagersegment (21, 22, 23) angeordnet ist, das mit einer an dem zweiten Lagerring (12) angeordneten zweiten Gleitfläche (12.3, 12.4, 12.5) zusammenwirkt.

8. Windenergieanlage nach einem der Ansprüche 1 bis 6, **dadurch gekennzeichnet, dass** an dem ersten Lagerring (11) mehrere hydrostatisch abgestützte zweite Gleitlagersegmente (21, 22, 23) angeordnet sind, die in einer Umfangsrichtung des ersten Lagerrings (11) voneinander beabstandet sind und mit einer an dem zweiten Lagerring (12) angeordneten zweiten Gleitfläche (12.3, 12.4, 12.5) zusammenwirken.

9. Windenergieanlage nach Anspruch 8, **dadurch gekennzeichnet, dass** die ersten Gleitlagersegmente (21, 22, 23) und die zweiten Gleitlagersegmente (21, 22, 23) hinsichtlich einer senkrecht zu einer Drehachse (D) der Lageranordnung (10) angeordneten Radialebene asymmetrisch angeordnet sind.

10. Windenergieanlage nach einem der vorhergehenden Ansprüche, **gekennzeichnet durch** mindestens eine Wälzkörperreihe (13, 14) mit mehreren Wälzkörpern (15, 16), die an einer ersten Laufbahn (11.4, 11.5) des ersten Lagerrings (11) und an einer zweiten Laufbahn (12.1, 12.2) des zweiten Lagerrings (12) abrollbar angeordnet sind.

## Claims

1. Wind turbine having a rotor shaft, wherein the rotor shaft is mounted by way of a bearing assembly (10) having a first bearing ring (11) and a second bearing ring (12) that is mounted so as to be rotatable in relation to the first bearing ring (11), wherein at least one hydrostatically supported first friction bearing segment (21, 22, 23) which interacts with a first friction face (12.3, 12.4, 12.5) that is disposed on the second bearing ring (12) is disposed on the first bearing ring (11), **characterized in that** the first friction bearing segment (21, 22, 23) is received in a receptacle pocket (11.6) of the first bearing ring (11) in such a manner that a first pressure chamber (24) is formed between the first bearing ring (11) and the first friction bearing segment (21, 22, 23), and the first friction bearing segment (21, 22, 23) is configured in such a manner that a plurality of, in particular three or four, second pressure chambers (25) are formed between the first friction bearing segment (21, 22, 23) and the second bearing ring (12), wherein the first pressure chamber (24) and the plurality of second presssure chambers (25) are connected by way of a plurality of ducts (28, 28', 28", 28"') that run through the first friction bearing segment (21, 22, 23), and the first friction bearing segment (21, 22, 23) has a first pressure face (26) which faces the first pressure chamber (24) and a plurality of second pressure faces (27, 27', 27", 27"') which face the second pressure chambers (25), wherein the first pressure face (26) is smaller than the sum of the plurality of second pressure faces (27, 27', 27", 27"').

2. Wind turbine according to Claim 1, **characterized in that** a plurality of hydrostatically supported first friction bearing segments (21, 22, 23) which are mutually spaced apart in a circumferential direction of the first bearing ring (11) and interact with a first friction face (12.3, 12.4, 12.5) that is disposed on the second bearing ring (12) are disposed on the first bearing ring (11).

3. Wind turbine according to one of Claims 1 to 2, **characterized in that** the second pressure faces (27) of the first friction bearing segment (21, 22, 23) are delimited by a peripheral protrusion (31).

4. Wind turbine according to one of the preceding claims, **characterized in that** a cross-sectional constriction (29), in particular a flow throttle, is disposed in the duct (28).

5. Wind turbine according to one of the preceding claims, **characterized in that** a sealing element (30) is disposed between the friction bearing segment (21, 22, 23) and the first bearing ring (11), in particular the receptacle pocket (11.6).

6. Wind turbine according to one of the preceding claims, **characterized in that** a cross-sectional constriction (29), in particular a flow throttle, is disposed in each duct (28, 28', 28", 28"'), wherein the cross-sectional constrictions (29) are preferably of dissimilar configurations.

7. Wind turbine according to one of the preceding claims, **characterized in that** at least one hydrostatically supported second friction bearing segment (21, 22, 23) which interacts with a second friction face (12.3, 12.4, 12.5) that is disposed on the second bearing ring (12) is disposed on the first bearing ring (11).

8. Wind turbine according to one of Claims 1 to 6, **characterized in that** a plurality of hydrostatically supported second friction bearing segments (21, 22, 23) which are mutually spaced apart in a circumferential direction of the first bearing ring (11) and interact with a second friction face (12.3, 12.4, 12.5) that is disposed on the second bearing ring (12) are disposed on the first bearing ring (11) .

9. Wind turbine according to Claim 8, **characterized in that** the first friction bearing segments (21, 22, 23) and the second friction bearing segments (21, 22, 23) are disposed so as to be asymmetrical in terms of a radial plane that is disposed so as to be perpendicular to a rotation axis (D) of the bearing assembly (10).

10. Wind turbine according to one of the preceding claims, **characterized by** at least one row of rolling elements (13, 14) having a plurality of rolling elements (15, 16) which are disposed so as to be capable of rolling on a first raceway (11.4, 11.5) of the first bearing ring (11) and on a second raceway (12.1, 12.2) of the second bearing ring (12) .

## Revendications

1. Éolienne comprenant un arbre de rotor, l'arbre de rotor étant supporté par un ensemble de paliers (10) comprenant une première bague de palier (11) et une deuxième bague de palier (12) montée à rotation par rapport à la première bague de palier (11), au moins un premier segment de palier à glissement (21, 22, 23) supporté de manière hydrostatique étant disposé sur la première bague de palier (11) et coopérant avec une première surface de glissement (12.3, 12.4, 12.5) disposée au niveau de la deuxième bague de palier (12), **caractérisée en ce que**
le premier segment de palier à glissement (21, 22, 23) est logé dans une poche de réception (11.6) de la première bague de palier (11) de telle sorte qu'une première chambre de pression (24) est formée entre la première bague de palier (11) et le premier segment de palier à glissement (21, 22, 23) et le premier segment de palier à glissement (21, 22, 23) est conçu de telle sorte que plusieurs, en particulier trois ou quatre, deuxièmes chambres de pression (25) sont formées entre le premier segment de palier à glissement (21, 22, 23) et la deuxième bague de palier (12), la première chambre de pression (24) et les plusieurs deuxièmes chambres de pression (25) étant reliées par le biais de plusieurs canaux (28, 28', 28", 28"') qui s'étendent à travers le premier segment de palier à glissement (21, 22, 23) et le premier segment de palier à glissement (21, 22, 23) comportant une première surface de pression (26) qui est dirigée vers la première chambre de pression (24) et plusieurs deuxièmes surfaces de pression (27, 27', 27", 27"') qui sont dirigées vers les deuxièmes chambres de pression (25), la première surface de pression (26) étant plus petite que la somme des plusieurs deuxièmes surfaces de pression (27, 27', 27", 27"').

2. Éolienne selon la revendication 1, **caractérisée en ce que** plusieurs premiers segments de palier à glissement (21, 22, 23) supportés de manière hydrostatique sont disposés sur la première bague de palier (11), sont espacés les uns des autres dans une direction circonférentielle de la première bague de palier (11) et coopèrent avec une première surface de glissement (12.3, 12.4, 12.5) disposée au niveau de la deuxième bague de palier (12).

3. Éolienne selon l'une des revendications 1 à 2, **caractérisée en ce que** les deuxièmes surfaces de pression (27) du premier segment de palier à glissement (21, 22, 23) sont délimitées par une saillie de bord (31).

4. Éolienne selon l'une des revendications précédentes, **caractérisée en ce qu'**un rétrécissement en coupe transversale (29), notamment un étrangleur d'écoulement, est disposé dans le canal (28).

5. Éolienne selon l'une des revendications précédentes, **caractérisée en ce qu'**un élément d'étanchéité (30) est disposé entre le segment de palier à glissement (21, 22, 23) et la première bague de palier (11), notamment la poche de réception (11.6).

6. Éolienne selon l'une des revendications précédentes, **caractérisée en ce qu'**un rétrécissement en coupe transversale (29), notamment un étranglement d'écoulement, est disposé dans chaque canal (28, 28', 28", 28"'), de préférence les rétrécissements en coupe transversale (29) étant conçus de manière différente.

7. Éolienne selon l'une des revendications précédentes, **caractérisée en ce qu'**au moins un deuxième segment de palier à glissement (21, 22, 23) supporté de manière hydrostatique est disposé sur la première bague de palier (11) et coopère avec une deuxième surface de glissement (12.3, 12.4, 12.5) au niveau de la deuxième bague de palier (12).

8. Éolienne selon l'une des revendications 1 à 6, **caractérisée en ce que** plusieurs deuxièmes segments de palier à glissement (21, 22, 23) supportés de manière hydrostatique sont disposés au niveau de la première bague de palier (11), sont espacés les uns des autres dans une direction circonférentielle de la première bague de palier (11) et coopèrent avec une deuxième surface à glissement (12.3, 12.4, 12.5) disposée au niveau de la deuxième bague de palier (12).

9. Éolienne selon la revendication 8, **caractérisée en ce que** les premiers segments de palier à glissement (21, 22, 23) et les deuxièmes segments de palier à glissement (21, 22, 23) sont disposés de manière asymétrique par rapport à un plan radial disposé perpendiculairement à un axe de rotation (D) de l'ensemble de paliers (10).

10. Éolienne selon l'une des revendications précédentes, **caractérisée par** au moins une rangée d'éléments roulants (13, 14) comprenant plusieurs éléments roulants (15, 16) qui sont disposés de manière à pouvoir rouler sur un premier chemin de roulement (11.4, 11.5) de la première bague de palier (11) et sur un deuxième chemin de roulement (12.1, 12.2) de la deuxième bague de palier (12).
